# EUROPÄISCHE PATENTSCHRIFT

(11) **EP 1 393 810 B1**
(45) Veröffentlichungstag und Bekanntmachung des Hinweises auf die Patenterteilung: **26.11.2008**
(21) Anmeldenummer: 03019749.5
(22) Anmeldetag: 29.08.2003
(51) Int. Cl.: B03B 9/00, B03B 13/00, G05B 17/02

(54) **Verfahren und Anordnung zur leistungsoptimierten Regelung der Zuführmenge einer Sand- oder Kiesaufbereitungsanlage**
Method and device for regulating the optimization of the amount of delivery for a plant for treating sand or gravel
Procédé et dispositif de régulation de l'optimisation de la quantité d'admission pour une installation de traitement du sable ou du gravier

(30) Priorität: 29.08.2002 DE 10240583
(43) Veröffentlichungstag der Anmeldung: 03.03.2004
(73) Patentinhaber: Hinz, Rüdiger, 45136 Essen (DE)
(72) Erfinder: Hinz, Rüdiger, 45136 Essen (DE)
(74) Vertreter: Kreutzer, Ulrich

(56) Entgegenhaltungen:
- DE-A1- 10 031 883

## Beschreibung

Die Erfindung betrifft ein Verfahren und eine Anordnung zur leistungs- und energieoptimierten Regelung der Zufuhrmenge des einer aus mehreren Aggregaten bestehenden Sand- und Kiesaufbereitungsanlage zwecks Aufbereitung zugeführten Materials schwankender Beschaffenheit, wobei die Belastung wenigstens zweier Aggregate von der Beschaffenheit des zugeführten Materials abhängt und wobei die Belastung zumindest derjenigen Aggregate, deren Belastung von der Beschaffenheit des zugeführten Materials abhängt, kontinuierlich durch Erfassung eines die Belastung des jeweiligen Aggregats repräsentierenden Meßwertes gemessen wird.

Ein solches Verfahren und eine entsprechende Anordnung sind aus dem deutschen Patent DE 100 31 883 C2 bekannt. Das dort beschriebene Verfahren und die entsprechende Anordnung haben sich in der Praxis überaus bewährt. Sie haben zu großen Leistungssteigerungen bei Sand- und Kiesaufbereitungsanlagen geführt.

Weiter ist es bei Sand- und Kiesaufbereitungsanlagen bekannt, die Belastung einzelner Aggregate zu messen und über entsprechende Regler oder Grenzwertgeber z.B. die Drehzahl zu verringern oder zu erhöhen und/oder den Materialstrom zu- oder abzuschalten.

Bei Anlagen der eingangs genannten Art besteht das Problem, daß die Beschaffenheit der der jeweiligen Anlage zugeführten und dort verarbeiteten, bearbeiteten oder aufbereiteten Stoffe, Roh- und Fertigprodukte und Materialien (wobei Stoffe, Roh- und Fertigprodukte und Materialien im folgenden allgemein mit dem Begriff Materialien bezeichnet werden) schwankt, was eine unterschiedliche Belastung zumindest bestimmter Aggregate solcher Anlagen nach sich zieht.

Um Überlastungen zu vermeiden wird deshalb bei den meisten Anlagen so verfahren, daß grundsätzlich nie die bei optimaler Beschaffenheit des zugeführten Materials maximal zuführbare Menge zugeführt wird, sondern nur eine um einen anlagenabhängigen Sicherheitsfaktor reduzierte Menge. Beispielsweise ist es bei Sand- und Kiesaufbereitungsanlagen üblich, statt der bei optimaler Zusammensetzung des Rohkieses maximal aufbereitbaren Menge von z.B. 100 t pro Stunde der Anlage lediglich 75 t pro Stunde zuzuführen, da die exakte Zusammensetzung des Rohkieses nicht bekannt ist und z.B. die Belastung der Vorwäsche stark davon abhängt, ob der Rohkies wenig oder viel Sand enthält.

Dagegen erlaubt es das aus dem genannten deutschen Patent DE 100 31 883 C2 bekannte Verfahren, die Zufuhrmenge des einer Anlage der eingangs genannten Art zugeführten Materials so zu regeln, daß die Auslastung der Anlage bei gleichbleibender Qualität der aufbereiteten Produkte bei einem kontinuierlichen Materialstrom optimiert ist.

Dabei beruht die in dem genannten deutschen Patent angegebene Lösung auf dem Grundgedanken, die Stromaufnahme der jeweiligen Aggregate zu messen, daraus anhand einer aggregatspezifischen, mehr oder weniger willkürlichen linearen Kennlinie eine relative Auslastung jedes Aggregats festzulegen und dann, wenn die Auslastung bestimmter Aggregate einen vorgegebenen Grenzwert noch nicht erreicht hat und es die Auslastung der dem jeweiligen Aggregat vor- oder nachgeschalteten Aggregate zuläßt, die Zufuhrmenge des der Anlage zugeführten Materials zu erhöhen.

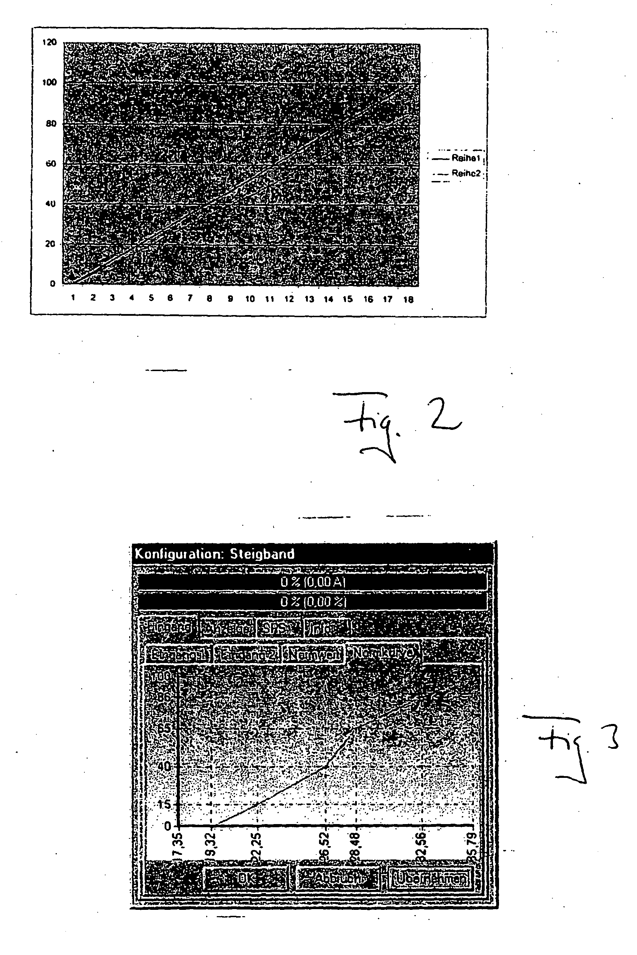

So werden z.B. bei einem Antrieb mit 100 Ampere Nennstrom dem Nullpunkt bei 0 Ampere der Maschinenauslastungswert 0% zugeordnet und eine einzige Auslastung, z.B. die100%-Auslastung, gemessen. Lag diese 100%-Auslastung bei z.B. 85 Ampere, so wurden den Werten zwischen 0 und 85 Ampere rein linear prozentuale Maschinenauslastungswerte zugeordnet. Dies bedeutet aber, daß die tatsächliche Auslastung eines Aggregats nur nach ihrem Maximum bestimmt werden kann (siehe hierzu Fig. 2).

Zudem erlauben es das aus dem genannten deutschen Patent bekannte Verfahren und die entsprechende Anordnung lediglich, die Materialbeschickung der Aufbereitungsanlage in Abhängigkeit der Maschinenauslastungswerte bei gleichbleibender Qualität der produzierten Materialien zu regeln. Der Energieverbrauch wird bei der bekannten Regelung der Zufuhrmenge nicht berücksichtigt.

Davon ausgehend liegt der Erfindung die Aufgabe zugrunde, das bekannte Verfahren und System zu verbessern.

Zur Verbesserung wird ein Verfahren zur leistungs- und energieoptimierten Regelung der Zufuhrmenge des einer aus mehreren Aggregaten bestehenden Sand- und Kiesaufbereitungsanlage zwecks Aufbereitung zugeführten Materials schwankender Beschaffenheit, wobei die Belastung wenigstens eines Aggregats von der Beschaffenheit des zugeführten Materials abhängt, wobei kontinuierlich oder diskontinuierlich zumindest ein die Belastung des wenigstens einen Aggregats, dessen Belastung von der Beschaffenheit des zugeführten Materials abhängt, repräsentierender Meßwert (Belastungswert) gemessen wird und wobei aus dem Belastungswert kontinuierlich oder diskontinuierlich eine variable, ein vorgebbares Optimalitätskriterium erfüllende Sollzufuhrmenge ermittelt wird, an die die tatsächlich zugeführte Zufuhrmenge (lstzufuhrmenge) unter Berücksichtigung vorgebbarer Randbedingungen automatisch angeglichen wird, vorgeschlagen, bei welchem die Ermittlung der Sollzufuhrmenge unter Berücksichtigung einer zuvor ermittelten, nicht-linearen Beziehung zwischen den jeweiligen Belastungswerten und der relativen (prozentualen) Auslastung des oder derjenigen Aggregate, deren Belastung von der Beschaffenheit des zugeführten Materials abhängt, erfolgt.

Weiter wird in dem Verfahren zur leistungs- und energieoptimierten Regelung der Zufuhrmenge des einer aus mehreren Aggregaten bestehenden Sand- und Kiesaufbereitungsanlage zwecks Aufbereitung zugeführten Materials schwankender Beschaffenheit, wobei die Belastung wenigstens eines Aggregats von der Beschaffenheit des zugeführten Materials abhängt, wobei kontinuierlich oder diskontinuierlich zumindest ein die Belastung des wenigstens einen Aggregats, dessen Belastung von der Beschaffenheit des zugeführten Materials abhängt, repräsentierender Meßwert (Belastungswert) gemessen wird und wobei aus dem Belastungswert kontinuierlich oder diskontinuierlich eine variable, ein vorgebbares Optimalitätskriterium erfüllende Sollzufuhrmenge ermittelt wird, an die die tatsächlich zugeführte Zufuhrmenge (Istzufuhrmenge) unter Berücksichtigung vorgebbarer Randbedingungen automatisch angeglichen wird, vorgeschlagen, daß die Gesamtenergieaufnahme (womit hier die von den Stromlieferanten bei der Abrechnung berücksichtigte Wirkleistung gemeint ist) der Anlage gemessen wird und die Ermittlung der Sollzufuhrmenge unter Berücksichtigung der Gesamtenergieaufnahme der Anlage erfolgt. Dieses Verfahren kann vorteilhaft so durchgeführt werden, daß die Gesamtenergieaufnahme über die Messung der elektrischen Phasenströme und die Messung der elektrischen Spannung erfaßt wird.

Bei einer bevorzugten Durchführungsform der Verfahren ist vorgesehen, daß zur Ermittlung der Sollzufuhrmenge eine automatisch abfragbare Tabelle in einem elektronischen Speichermedium abgefragt wird, in welchem eine nicht-lineare Beziehung zwischen den meßbaren Belastungswerten eines Aggregats und der relativen Auslastung des jeweiligen Aggregats hinterlegt ist.

Alternativ oder zusätzlich kann zur Ermittlung der Sollzufuhrmenge die relative Auslastung eines Aggregats durch Einsetzen des jeweiligen Belastungswertes in eine durch eine Anzahl von Messungen ermittelte, in einem automatisch abfragbaren elektronischen Speichermedium hinterlegte nicht-lineare mathematische Formel automatisch ermittelt werden.

Als der die Belastung eines Aggregats repräsentierende Belastungswert kann z.B. die elektrische Stromaufnahme des jeweiligen Aggregats oder die Drehzahl eines das jeweilige Aggregat antreibenden Motors gemessen werden.

Hängt die Belastung mehrerer Aggregate von der Beschaffenheit des zugeführten Materials ab, so können zunächst die Belastungen verschiedener Aggregate repräsentierende Eingangssignale erfaßt, auf einen einheitlichen Wertebereich normiert und zusammengefaßt werden, worauf sodann ein Regelwert ermittelt und schließlich in Ausgangssignale zur Regelung einer die Zufuhrmenge dosierenden Dosiereinrichtung umgesetzt wird.

In anordnungsmäßiger Hinsicht wird die genannte Aufgabe gelöst von einer Anordnung zur leistungs- und/oder energieoptimierten Regelung der Zufuhrmenge des einer aus mehreren Aggregaten bestehenden Sand- und Kiesaufbereitungsanlage zwecks Aufbereitung zugeführten Materials schwankender Beschaffenheit, wobei die Belastung wenigstens eines Aggregats von der Beschaffenheit des zugeführten Materials abhängt, wobei die Anordnung Mittel zur Messung zumindest eines die Belastung des wenigstens einen Aggregats, dessen Belastung von der Beschaffenheit des zugeführten Materials abhängt, repräsentierenden Meßwertes (Belastungswert) und eine Regeleinrichtung zur Ermittlung einer variablen, ein vorgebbares Optimalitätskriterium erfüllenden Sollzufuhrmenge aus dem gemessenen Belastungswert und zur Erzeugung von Regelsignalen zur Anpassung der tatsächlich zugeführten Zufuhrmenge (lstzufuhrmenge) an die variable Sollzufuhrmenge unter Berücksichtigung vorgebbarer Randbedingungen umfaßt, wobei die Regeleinrichtung so ausgebildet ist, daß zur Ermittlung der Sollzufuhrmenge eine zuvor ermittelte, nicht-lineare Beziehung zwischen den jeweiligen Belastungswerten und der relativen (prozentualen) Auslastung des oder derjenigen Aggregate, deren Belastung von der Beschaffenheit des zugeführten Materials abhängt, berücksichtigbar ist.

Weiter wird die Aufgabe gelöst von der Anordnung zur leistungs- und energieoptimierten Regelung der Zufuhrmenge des einer aus mehreren Aggregaten bestehenden Sand- und Kiesaufbereitungsanlage zwecks Aufbereitung zugeführten Materials schwankender Beschaffenheit, wobei die Belastung wenigstens eines Aggregats von der Beschaffenheit des zugeführten Materials abhängt, wobei die Anordnung Mittel zur Messung zumindest eines die Belastung des wenigstens einen Aggregats, dessen Belastung von der Beschaffenheit des zugeführten Materials abhängt, repräsentierenden Meßwertes (Belastungswert) und eine Regeleinrichtung zur Ermittlung einer variablen, ein vorgebbares Optimalitätskriterium erfüllenden Sollzufuhrmenge aus dem gemessenen Belastungswert und zur Erzeugung von Regelsignalen zur Anpassung der tatsächlich zugeführten Zufuhrmenge (Istzufuhrmenge) an die variable Sollzufuhrmenge unter Berücksichtigung vorgebbarer Randbedingungen umfaßt, wobei Mittel zur Messung der elektrischen Phasenströme und der Messung der elektrischen Spannung aller laufenden Aggregate der Anlage vorgesehen sind und die Regeleinrichtung so ausgebildet ist, daß zur Ermittlung der Sollzufuhrmenge aus den elektrischen Phasenströmen und der elektrischen Spannung aller laufenden Aggregate der Anlage ermittelten Wirkleistung berücksichtigbar ist.

In vorteilhafter Weiterbildung können die Anordnungen ein automatisch abfragbares elektronisches Speichermedium umfassen, in welchem eine eine automatische Berechnung erlaubende, durch eine Anzahl von Messungen ermittelte, nicht-lineare mathematische Formel zur Ermittlung der relativen (prozentualen) Auslastung des oder derjenigen Aggregate, deren Belastung von der Beschaffenheit des zugeführten Materials abhängt, aus den jeweiligen Belastungswerten und/oder eine automatisch abfragbare Tabelle, in welcher meßbaren Belastungswerten eines Aggregats und relative Auslastungen des jeweiligen Aggregats zugeordnet sind, hinterlegt ist.

Weitere Einzelheiten und Vorteile der Erfindung ergeben sich aus der rein beispielhaften und nicht-beschränkenden Beschreibung des Einsatzes eines erfindungsgemäßen Verfahrens und der Anwendung einer erfindungsgemäßen Anordnung bei einer Kiesaufbereitungsanlage in Verbindung mit der Zeichnung.

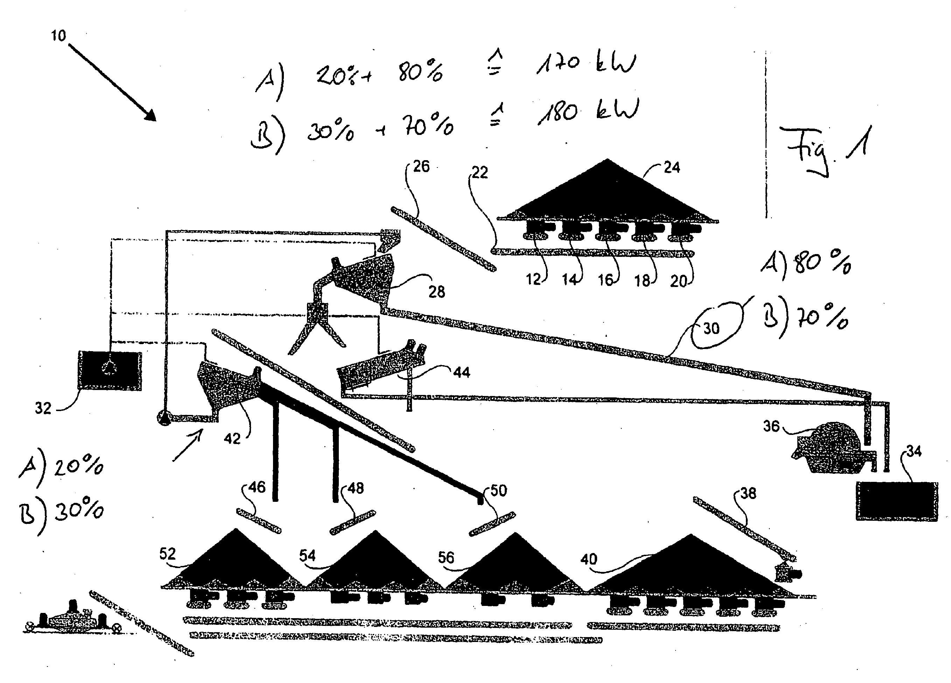

In der Figur 1 ist schematisch eine in ihrer Gesamtheit mit 10 bezeichnete Sand- und Kiesaufbereitungsanlage gezeigt, bei welcher mittels mehrerer Dosierkombinationen 12, 14, 16, 18 und 20 über einen Tunnelabzug 22 Kies aus einer Rohkieshalde 24 abgezogen und über ein Steigband 26 einem Eindeckersieb 28 zwecks Vorwäsche zugeführt wird.

In der Vorwäsche werden Sand und Körnung getrennt. Der Sand wird über eine Rohrleitung 30 zu einem Schöpfrad 36 befördert von wo aus er auf ein Förderband 38 gehoben wird, welches ihn schließlich zur Sandhalde 40 transportiert. Überschüssiger Schlamm wird einem Schlammteich 34 zugeführt.

Die Körnung wird von der Vorwäsche wahlweise entweder direkt zu einem Dreideckersieb 42, oder zunächst zu einer Schwertwäsche 44 geleitet, von wo aus sie ebenfalls zu dem Dreideckersieb 42 gelangt. In der Schwertwäsche 44, im Dreideckersieb 42 und im Eindeckersieb 28 kann das zu klassierende Material mit Wasser aus einem Reservoir 32 bebraust werden. Mittels des Dreideckersiebs 42 wird die Körnung in die üblichen drei Qualitätsstufen klassiert und über entsprechende Förderbänder 46, 48 und 50 zu den Kieshalden 52, 54 und 56 für Gesteinstrümmer mit unterschiedlichen Durchmesserbereichen transportiert.

Wie in Fig. 1 angedeutet, kann es sein, daß im Beispiel A) die Auslastung des Aggregates 42 bei 20%, die Auslastung des Aggregates 30 bei 80% liegt. Diese Auslastungswerte können z.B. einer Gesamtenergieaufnahme von 170 kW entsprechen. Es kann nun vorgegeben werden, daß die Gesamtenergieaufnahme (regelungstechnisch auch als Energieeintrag bezeichnet) maximal 180 kW betragen kann. Dies bedeutet dann, daß im Fall A) der Anlage mehr Material zugeführt werden kann.

Im Fall B) liegt die Auslastung des Aggregat 42 bei z.B. 30%, die Auslastung des Aggregats 30 bei 70%. Diese Auslastungswerte können aber bereits der vordefinierten Maximalleistung von 180 kW entsprechen, so daß dann die Abgabemenge nicht erhöht würde.

Dabei sei darauf hingewiesen, daß sich die prozentualen Auslastungswerte im Beispiel rein zufällig zu 100% addieren, daß aber die Auslastung des Aggregats 42 nur mittelbar mit der Auslastung des Aggregats 30 zusammenhängt. Insbesondere können - bei entsprechender Zusammensetzung des Materials - theoretisch beide Aggregate jeweils zu 100% ausgelastet sein.

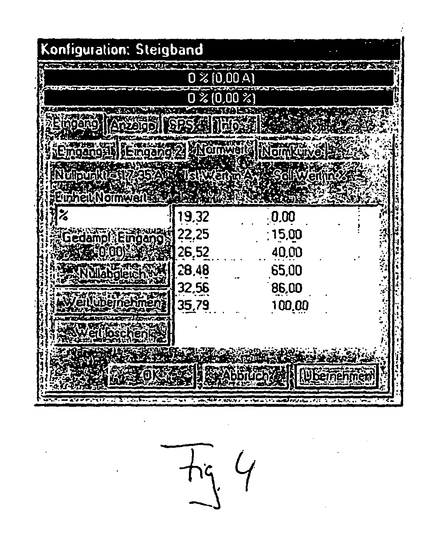

Die Erfindung erlaubt es nun, Zwischenmeßwerte einem Maschinenauslastungswert zuzuordnen und somit die Maschinenauslastung auch in den unteren Bereichen besser zu erfassen (vgl. Fig. 3 und Fig. 4). Damit wird nun auch die Leerlaufbelastung berücksichtigt. Über einen Nullabgleich kann der Leerlaufstrom mit einer Maschinenauslastung von 0% gleich gesetzt werden.

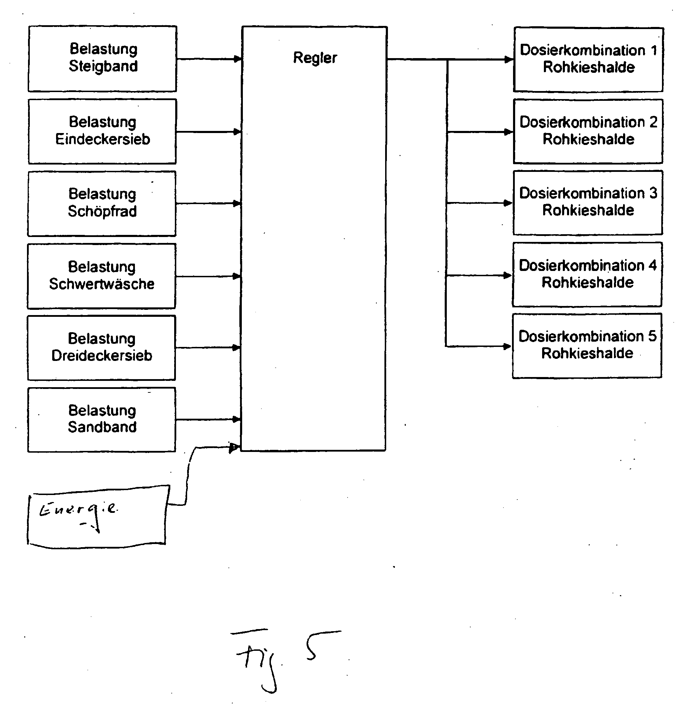

Über ein Eingangsmodul (Modul "Energie" - vgl. Fig. 5) kann der gesamte Energieeintrag über die Messung der elektrischen Phasenströme und die Messung der elektrischen Spannung erfaßt werden. Das bislang bekannte Verfahren und System erlaubt nur die maximale Materialbeschickung der Aufbereitungsanlage in Abhängigkeit der Maschinenauslastungswerte bei gleichbleibender Qualität der produzierten Materialien. Dank des den Energieeintrag aufnehmenden Moduls kann die Anlagenleistung nun auch energieoptimiert gefahren werden. Die so ermittelte Wirkleistung kann auf einen Anlagenauslastungswert zwischen 0 und 100% umgesetzt werden. Damit kann die Aufgabeleistung sich nach dem Energieeintrag regeln. Über ein Signal eines Energieversorgungsunternehmens kann automatisch die Aufnahmeleistung gedrosselt und wieder freigegeben werden, so daß die Stromkosten minimiert werden.

In der Figur 5 das Prinzip der erfindungsgemäßen Regeleinrichtung gezeigt: die mittels an sich bekannter und hier nicht weiter gezeigter Meßwertaufnehmer gemessenen Belastungswerte von Steigband, Eindeckersieb, Schöpfrad, Schwertwäsche, Dreideckersieb und Steigband gemessenen Belastungen sowie die Gesamtenergieaufnahme der Anlage (Modul "Energie") werden der Regeleinrichtung als Eingangsgrößen zugeleitet, welche daraus Regelsignale zur Regelung der verschiedenen angeschlossenen Dosierkombinationen erzeugt.

Die gezeigte Regeleinrichtung arbeitet wie folgt: Mit Hilfe diverser in der gesamten Anlage verteilter Meßwertaufnehmer wird die Belastung einzelner Anlagenteile erfaßt. Im gezeigten Beispielkieswerk sind alle Antriebe mit einer Strommessung ausgerüstet, so daß die Belastungswerte jedes Aggregats erfaßt werden. Maßgeblich zur Beurteilung der Auslastung der Aufbereitungsanlage sind hierbei lediglich folgende Antriebe: Steigband zur Aufbereitungsanlage, Eindeckersieb, Schöpfrad, Schwertwäsche, Dreideckersieb und Sandband.

Wichtig hierbei ist eine Normierung der Eingangsgrößen. 100% Auslastung der Maschine ist nicht gleichbedeutend mit 100% Strombelastung. Die optimale Leistung der einzelnen Aggregate kann schon bei 60 - 70% der Stromaufnahme erreicht sein. Also werden die Eingangsmeßgröße der Maschinen auf 100% Maschinenauslastung normiert und zum Regler übertragen. Weiterhin ist zu beachten, daß die Erhöhung der Aufgabeleistung zeitlich verzögert ihre Auswirkung zeigt. Dementsprechend weißt die Erfindung zwei einstellbare Zeitverhalten für die Verringerung und für die Erhöhung der Aufgabeleistung auf. Um kurzzeitige Meßwertschwankungen auszublenden ist jeder Eingang mit einem Dämpfungsglied versehen.

Durch Auswertung digitaler Signale aus der Anlagensteuerung kann die Auswertung der einzelnen Eingänge in der Eingangsstufe gezielt an- und abgeschaltet werden, damit nur die relevanten Meßwerte in der Regelstufe Berücksichtigung finden.

In der Eingangsstufe werden die unterschiedlichen Meßgrößen auf einen einheitlichen Meßbereich normiert. Hierzu kann bei Bedarf jeder einzelne Meßwert invertiert werden, um unterschiedlichsten Meßwertaufnehmern gerecht zu werden.

Um Meßschwankungen einzelner Meßwertaufnehmer auszugleichen, können diese einzeln mit einem sogenannten Dämpfungsfaktor versehen werden. Hierbei wird über den gewählten Zeitraum ein Mittelwert des Meßwertes ermittelt. Die so erfaßten Eingangsmeßwerte können jeweils durch die Multiplikation mit einem zweiten Meßwert sowie eines Rechenfaktors beeinflußt werden. Weiterhin besteht die Möglichkeit, beim Über- und Unterschreiten einstellbarer Grenzbereiche digitale Signale zur Beeinflussung des Massenstroms in die Anlagensteuerung zurückzugeben.

Die Darstellung der Eingangsmeßwerte sowie der normierten und gedämpften Eingangswerte erfolgt mittels Balkenanzeige und in Klartext. Das Unter- und Überschreiten der gewählten Grenzwerte wird durch Farbumschläge der Balkenanzeige visualisiert. Für die weitere Verarbeitung der gedämpften und normierten Eingangswerte können diese auf verschiedene Weise zusammengefaßt werden:
- Minimalwert: Hierbei wird der kleinste gedämpfte und normierte Eingangswert für die Regelungsstufe berücksichtigt.
- Mittelwert: Es wird ein Mittelwert aus allen vorhandenen Eingangswerten gebildet.
- Maximalwert: Hierbei wird der größte gedämpfte und normierte Eingangswert für die Regelung berücksichtigt.

Die Regelstufe besteht aus zwei unabhängigen miteinander gekoppelten PID-Reglern. Je nach Tendenz des zusammengefaßten Eingangssignals (auf- oder abwärts) wird der eine bzw. der andere Regler aktiv. Die einzelnen Proportional- , Integral- und Differentialanteile der beiden Regler können in der Größe angepaßt bzw. ganz abgeschaltet werden. Die zeitliche Abtastrate des zusammengefaßten Eingangswerts in der Regelstufe kann angepaßt werden.

Durch zwei weitere einstellbare Zeiten kann für jeden der beiden Regler die Regelgeschwindigkeit und die Regeldauer eingestellt werden.

Durch die Auswertung eines digitalen Signals aus der Anlagensteuerung kann die Regelstufe an- und abgeschaltet werden. Beim Einschalten der Regelstufe wird der Regelwert innerhalb eines einstellbaren Zeitfensters kontinuierlich in den Regelbereich gefahren. Überschreitet das zusammengefaßte Eingangssignal einen frei einstellbaren Schwellwert, wird der Regelungsalgorithmus aktiviert und die aktive Regelung der Anlage beginnt. Der maximale Regelwert kann durch einen einstellbaren Maximalwert begrenzt werden. Aufgrund unterschiedlicher Anforderungen in der Anlage kann das Reglerverhalten invertiert werden.

Durch Benutzereingriff kann der Reglerwert von dem Automatikmodus, in dem der Reglerwert von dem Regleralgorithmus bestimmt wird in einen Handmodus geschaltet werden, in dem der Benutzer den Reglerwert vorgibt. Um Sprünge innerhalb der Umschaltung zu verhindern entspricht der Reglerwert beim Umschalten in den Handmodus dem letzten Automatikwert. Beim Umschalten in den Automatikmodus wird der letzte Handwert in den Regleralgorithmus übernommen und von dort aus weitergeregelt. Der Arbeitspunkt der Reglerstufe kann per Hand vorgewählt werden oder auch per Knopfdruck aus dem aktuellen zusammengefaßten Eingangssignal automatisch erfaßt werden. Die Regelungsabweichung wird durch eine Balkenanzeige und auch in Klartext angezeigt. Das Über- und Unterschreiten einstellbarer Grenzbereiche wird durch Farbumschläge des Anzeigebalkens dargestellt.

Der Reglerwert wird in einer Teilerstufe gleichmäßig auf alle angeschalteten Ausgänge verteilt. Zusätzlich kann pro Ausgangsmodul der Wert der Teilerstufe durch einen Teilerfaktor proportional erhöht oder verringert werden. Durch Auswertung digitaler Signale aus der Anlagensteuerung können die einzelnen Ausgänge gezielt an- und abgeschaltet werden, damit nur die relevanten Ausgänge in der Teilerstufe Berücksichtigung finden. Der bis hierher normierte Ausgangswert wird durch Eingabe eines unteren und oberen Grenzwertes in einen dem physikalischen Ausgang angepaßten Wert umgewandelt. Der Ausgangswert kann zusätzlich in ein definierbares Fenster begrenzt werden, um Über- und Untersteuerung der an die Ausgänge angeschlossene Anlagenteile zu verhindern.

Für jeden Ausgang können Grenzwerte festgelegt werden, die beim Über- und Unterschreiten des Ausgangssignals digitale Signale in die Anlagensteuerung zurückgeben. Die Darstellung der Ausgangswerte erfolgt mittels Balkenanzeige und in Klartext. Das Unter- und Überschreiten der gewählten Grenzwerte wird durch Farbumschläge der Balkenanzeige visualisiert. Werden einzelne Ausgänge abgeschaltet, kann der letzte dem Anlagenteil übergebene Ausgangswert gezielt vorgewählt werden:
- Der Ausgang wird auf seinen Minimalwert gesetzt
- Der letzte Ausgangswert wird belassen
- Der Ausgang wird auf seinen Maximalwert gesetzt

Dieses Abschaltverhalten ist bei Beenden des Programms auch auswählbar.

Mit der Erfindung lassen sich alle relevanten Meßwerte erfassen, die dann angepaßt auf einen Regler wirken und somit kontinuierlich den Materialstrom nach der Belastung der Gesamtanlage regeln und steuern können. Damit wird eine kontinuierliche Beschickung der Anlage mit Material, eine schnelle Reaktion auf Schwankungen in der Materialzusammensetzung und eine vollautomatische Regelung auf die jeweils maximale Anlagenleistung nach der tatsächlichen Belastung der Gesamtanlage möglich.

## Patentansprüche

1. Verfahren zur Regelung der Zufuhrmenge des einer aus mehreren Aggregaten bestehenden Sand- und Kiesaufbereitungsanlage zwecks Aufbereitung zugeführten Materials schwankender Beschaffenheit,
- wobei die Belastung wenigstens eines Aggregats von der Beschaffenheit des zugeführten Materials abhängt,
- wobei kontinuierlich oder diskontinuierlich zumindest ein die Belastung des wenigstens einen Aggregats, dessen Belastung von der Beschaffenheit des zugeführten Materials abhängt, repräsentierender Meßwert (Belastungswert) gemessen wird und
- wobei aus dem Belastungswert kontinuierlich oder diskontinuierlich eine variable, ein vorgebbares Optimalitätskriterium erfüllende Sollzufuhrmenge ermittelt wird, an die die tatsächlich zugeführte Zufuhrmenge unter Berücksichtigung vorgebbarer Randbedingungen automatisch angeglichen wird,
**dadurch gekennzeichnet,**
- **daß** die Gesamtenergieaufnahme der Anlage gemessen wird und
- **daß** die Ermittlung der Sollzufuhrmenge unter Berücksichtigung der Gesamtenergieaufnahme der Anlage und unter Berücksichtigung einer zuvor ermittelten, nicht-linearen Beziehung zwischen den jeweiligen Belastungswerten und der relativen, prozentualen Auslastung des oder derjenigen Aggregate, deren Belastung von der Beschaffenheit des zugeführten Materials abhängt, erfolgt.

2. Verfahren nach Anspruch 1, **dadurch gekennzeichnet, daß** die Gesamtenergieaufnahme über die Messung der elektrischen Phasenströme und die Messung der elektrischen Spannung erfaßt wird.

3. Verfahren nach einem der Ansprüche 1 oder 2, **dadurch gekennzeichnet, daß** zur Ermittlung der Sollzufuhrmenge eine automatisch abfragbare Tabelle in einem elektronischen Speichermedium abgefragt wird, in welchem eine nicht-lineare Beziehung zwischen den meßbaren Belastungswerten eines Aggregats und der relativen Auslastung des jeweiligen Aggregats hinterlegt ist.

4. Verfahren nach einem der Ansprüche 1 bis 3, **dadurch gekennzeichnet, daß** zur Ermittlung der Sollzufuhrmenge die relative Auslastung eines Aggregats durch Einsetzen des jeweiligen Belastungswertes in eine durch eine Anzahl von Messungen ermittelte, in einem automatisch abfragbaren elektronischen Speichermedium hinterlegte nicht-lineare mathematische Formel automatisch ermittelt wird.

5. Verfahren nach einem der Ansprüche 1 bis 4, **dadurch gekennzeichnet, daß** als der die Belastung eines Aggregats repräsentierende Belastungsert die elektrische Stromaufnahme des jeweiligen Aggregats oder die Drehzahl eines das jeweilige Aggregat antreibenden Motors gemessen wird.

6. Verfahren nach einem der Ansprüche 1 bis 5, **dadurch gekennzeichnet, daß** zunächst die Belastungen verschiedener Aggregate repräsentierende Eingangssignale erfaßt, auf einen einheitlichen Wertebereich normiert und zusammengefaßt werden, daß sodann ein Regelwert ermittelt und schließlich in Ausgangssignale zur Regelung einer die Zufuhrmenge dosierenden Dosiereinrichtung umgesetzt wird.

7. Anordnung zur Regelung der Zufuhrmenge des einer aus mehreren Aggregaten bestehenden Sand- und Kiesaufbereitungsanlage zwecks Aufbereitung zugeführten Materials schwankender Beschaffenheit, wobei die Belastung wenigstens eines Aggregats von der Beschaffenheit des zugeführten Materials abhängt, umfassend
- Mittel zur Messung zumindest eines die Belastung des wenigstens einen Aggregats, dessen Belastung von der Beschaffenheit des zugeführten Materials abhängt, repräsentierenden Meßwertes (Belastungswert),
- eine Regeleinrichtung zur Ermittlung einer variablen, ein vorgebbares Optimalitätskriterium erfüllenden Sollzufuhrmenge aus dem gemessenen Belastungswert und zur Erzeugung von Regelsignalen zur Anpassung der tatsächlich zugeführten Zufuhrmenge an die variable Sollzufuhrmenge unter Berücksichtigung vorgebbarer Randbedingungen,
**dadurch gekennzeichnet,**
- **daß** Mittel zur Messung der elektrischen Phasenströme und der Messung der elektrischen Spannung aller laufenden Aggregate der Anlage vorgesehen sind und
- **daß** die Regeleinrichtung so ausgebildet ist, daß zur Ermittlung der Sollzufuhrmenge eine aus den elektrischen Phasenströmen und der elektrischen Spannung aller laufenden Aggregate der Anlage ermittelten Wirkleistung und eine zuvor ermittelte, nicht-lineare Beziehung zwischen den jeweiligen Belastungswerten und der relativen, prozentualen Auslastung des oder derjenigen Aggregate, deren Belastung von der Beschaffenheit des zugeführten Materials abhängt, berücksichtigbar sind.

8. Anordnung nach Anspruch 7, **dadurch gekennzeichnet, daß** ein automatisch abfragbares elektronisches Speichermedium vorgesehen ist, in welchem eine eine automatische Berechnung erlaubende, durch eine Anzahl von Messungen ermittelte, nicht-lineare mathematische Formel zur Ermittlung der relativen, prozentualen Auslastung des oder derjenigen Aggregate, deren Belastung von der Beschaffenheit des zugeführten Materials abhängt, aus den jeweiligen Belastungswerten und/oder eine automatisch abfragbare Tabelle, in welcher meßbaren Belastungswerten eines Aggregats relative Auslastungen des jeweiligen Aggregats zugeordnet sind, hinterlegt ist.

## Claims

1. A method for the regulation of the supply volume fed to a sand and gravel conditioning plant consisting of a plurality of aggregates for the purpose of conditioning a supply material of a fluctuating nature,
- wherein the load of at least one aggregate depends upon the nature of the material fed,
- wherein at least one measurement value (load value) representing the load of the at least one aggregate, the load of which depends upon the nature of the supply material, is measured continuously or discontinuously, and
- wherein a required, variable supply volume, which meets a predeterminable criterion of optimality, is determined continuously or discontinuously from the load value to which the supply volume which is actually fed is adapted automatically while taking into account predeterminable marginal conditions,
**characterized in that**
- the overall consumption of energy of the plant is measured, and
- the determination of the required supply volume is performed while taking into account the overall consumption of energy in the plant and taking into account a non-linear relationship previously established between the respective load values and a relative per cent rate of utilization of that aggregate or those aggregates, the load of which depends upon the nature of the material fed.

2. The method according to claim 1, **characterized in that** the overall consumption of energy is logged by measuring the electric phase currents and measuring the electric voltage.

3. The method according to any one of claim 1 or 2, **characterized in that** an automatically interrogatable table is queried for a determination of the required supply volume in an electronic storage medium, in which a non-linear relationship between the measurable load values of an aggregate and a relative utilization rate of the respective aggregate is stored.

4. The method according to any one of claim 1 to 3, **characterized in that**, for a determination of the required supply volume, the relative utilization rate of an aggregate is determined by entering the respective load value into a non-linear mathematical formula determined by a number of measurements and stored in an automatically interrogatable, electronic storage medium.

5. The method according to any one of claim 1 to 4, **characterized in that** the electric current consumption of the respective aggregate or the speed of a motor driving the respective aggregate is measured as a load value representing the load of an aggregate.

6. The method according to any one of claim 1 to 5, **characterized in that** the input signals representing the loads of various aggregates are first logged, are then normalized to have a uniform range of values, and are summarized so that a regulation value is determined and is finally transformed into output signals for a regulation of a proportioning device metering the supply volume.

7. An assembly for the regulation of a supply volume fed to a sand and gravel conditioning plant consisting of a plurality of aggregates for the purpose of conditioning a supply material of a fluctuating nature, wherein the load of at least one aggregate depends upon the nature of the material fed, comprising
- means for the measurement of at least one measuring value (load value) representing the load of the at least one aggregate, the load of which depends upon the nature of the material fed,
- a regulating device for the determination of a variable, required supply volume, which meets a predeterminable criterion of optimality, from the load value measured, and for the generation of regulation signals to adapt the supply volume actually fed to the variable required supply volume, while taking into account predeterminable marginal conditions,
**characterized in that**
- means for the measurement of the electric phase currents and measurement of the electric voltage of all aggregates running within the plant are provided, and,
- the regulation device is configured such that, for a determination of the required supply volume an effective power determined from the electric phase currents and electric voltages of all aggregates running within the plant and a non-linear relationship previously determined between the respective load values and a relative per cent utilization rate of that aggregate or those aggregates, the load of which depends upon the nature of the material fed, may be taken into account.

8. The assembly according to claim 7, **characterized in that** an automatically interrogatable, electronic storage medium is provided wherein a non-linear mathematical formula, which allows an automatic calculation and is determined by a number of measurements, is stored for a determination of the relative per cent utilization rate of that aggregate or those aggregates, the load of which depends upon the nature of the material fed, from the respective load values and/or an automatically interrogatable table, in which measurable load values of a aggregate are associated with relative utilization rates of the respective aggregate.

## Revendications

1. Procédé de régulation de la quantité d'alimentation de la matière de nature variable qui, aux fins de sa préparation, est amenée à une installation de préparation de sable et de gravier se composant de plusieurs agrégats,
- la charge d'au moins un agrégat dépendant de la nature de la matière amenée,
- dans lequel on mesure de façon continue ou discontinue au moins une valeur de mesure (valeur de charge) représentant la charge dudit au moins un agrégat dont la charge dépend de la nature de la matière amenée, et
- dans lequel on détermine de façon continue ou discontinue, à partir de la valeur de charge, une quantité d'alimentation exigée variable remplissant un critère d'optimalité prédéterminable, à laquelle la quantité d'alimentation réellement amenée est assimilée automatiquement en considération de conditions marginales prédéterminables,
**caractérisé par le fait**
- **que** l'on mesure l'absorption totale d'énergie de l'installation, et
- **que** la quantité d'alimentation exigée est déterminée en considération de l'absorption totale d'énergie de l'installation et en considération d'une relation non-linéaire déterminée auparavant entre les valeurs de charge respectives et l'utilisation relative en pour-cent du ou des agrégat(s) dont la charge dépend de la nature de la matière amenée.

2. Procédé selon la revendication 1, **caractérisé par le fait que** l'absorption totale d'énergie est saisie par la mesure des courants de phase électriques et par la mesure de la tension électrique.

3. Procédé selon l'une des revendications 1 ou 2, **caractérisé par le fait que**, pour déterminer la quantité d'alimentation exigée, on consulte un tableau automatiquement consultable dans un support électronique de mémoire où est mémorisée une relation non-linéaire entre les valeurs de charge mesurables d'un agrégat et l'utilisation relative de l'agrégat respectif.

4. Procédé selon l'une des revendications 1 à 3, **caractérisé par le fait que**, pour déterminer la quantité d'alimentation exigée, l'utilisation relative d'un agrégat est déterminée automatiquement en intégrant la valeur respective de charge dans une formule mathématique non-linéaire déterminée à partir d'un nombre de mesures et mémorisée sur un support électronique de mémoire automatiquement consultable.

5. Procédé selon l'une des revendications 1 à 4, **caractérisé par le fait que**, en tant que valeur de charge représentant la charge d'un agrégat, on mesure la consommation de courant électrique de l'agrégat respectif ou le nombre de tours d'un moteur entraînant l'agrégat respectif.

6. Procédé selon l'une des revendications 1 à 5, **caractérisé par le fait que**, d'abord, des signaux d'entrée représentant les charges d'agrégats différents sont saisis, sont normalisés à une gamme uniforme de valeurs et sont regroupés, que, ensuite, une valeur de réglage est déterminée et est transformée enfin en signaux de sortie pour le réglage d'un dispositif de dosage qui dose la quantité d'alimentation.

7. Dispositif de régulation de la quantité d'alimentation de la matière de nature variable qui, aux fins de sa préparation, est amenée à une installation de préparation de sable et de gravier se composant de plusieurs agrégats, la charge d'au moins un agrégat dépendant de la nature de la matière amenée, comprenant
- des moyens pour mesurer au moins une valeur de mesure (valeur de charge) représentant la charge dudit au moins un agrégat dont la charge dépend de la nature de la matière amenée,
- un dispositif de réglage destiné à déterminer une quantité d'alimentation exigée variable remplissant un critère d'optimalité prédéterminable, à partir de la valeur mesurée de charge, ainsi qu'à générer des signaux de réglage pour l'adaptation de la quantité d'alimentation réellement amenée à la quantité d'alimentation exigée variable en considération de conditions marginales prédéterminables,
**caractérisé par le fait**
- **que** l'on prévoit des moyens de mesure des courants de phase électriques et de mesure de la tension électrique de tous les agrégats en marche de l'installation, et
- **que** ledit dispositif de réglage est conçu de telle façon que, pour déterminer la quantité d'alimentation exigée, on peut prendre en considération une puissance active déterminée à partir des courants de phase électriques et de la tension électrique de l'ensemble des agrégats en marche de l'installation ainsi qu'une relation non-linéaire déterminée auparavant entre les valeurs de charge respectives et l'utilisation relative en pour-cent du ou des agrégat(s) dont la charge dépend de la nature de la matière amenée.

8. Dispositif selon la revendication 7, **caractérisé par le fait que** l'on prévoit un support électronique de mémoire automatiquement consultable où est mémorisé une formule mathématique non-linéaire qui permet une calculation automatique et est déterminée à partir d'un nombre de mesures et qui sert à déterminer l'utilisation relative en pour-cent du ou des agrégat(s) dont la charge dépend de la nature de la matière amenée, à partir des valeurs de charge respectives, et/ou un tableau automatiquement consultable dans lequel à des valeurs de charge mesurables d'un agrégat sont associées des utilisations relatives de l'agrégat respectif.
